(19) Europäisches Patentamt European Patent Office Office européen des brevets

(11) **EP 4 503 220 A1**

(12) **EUROPEAN PATENT APPLICATION**
published in accordance with Art. 153(4) EPC

(43) Date of publication:
**05.02.2025 Bulletin 2025/06**

(21) Application number: **22934236.5**

(22) Date of filing: **31.03.2022**

(51) International Patent Classification (IPC):
*H01M 10/0525* (2010.01)    *H01M 50/112* (2021.01)

(52) Cooperative Patent Classification (CPC):
**H01M 10/0525; H01M 50/112;** Y02E 60/10

(86) International application number:
**PCT/CN2022/084557**

(87) International publication number:
**WO 2023/184398 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• LIU, Daolin
  **Ningde, Fujian 352100 (CN)**
• HE, Ping
  **Ningde, Fujian 352100 (CN)**

(74) Representative: **Klunker IP Patentanwälte PartG mbB Destouchesstraße 68 80796 München (DE)**

(54) **ELECTROCHEMICAL DEVICE AND ELECTRONIC DEVICE**

(57)    This application discloses an electrochemical device and an electronic device. The electrochemical device includes a housing, a first electrode assembly, a second electrode assembly and N separators. The N separators are arranged along a first direction, so that the N separators and the housing together define N+1 accommodating cavities arranged along the first direction. The N+1 accommodating cavities include a first accommodating cavity and a second accommodating cavity adjacent to each other, wherein $N \geq 2$. The first electrode assembly is accommodated in the first accommodating cavity, and the second electrode assembly is accommodated in the second accommodating cavity. The second electrode assembly is far from a reference surface relative to the first electrode assembly. The reference surface is a plane that passes through the center of the electrochemical device along the first direction and is perpendicular to the first direction. In this application, the volume V1 of the first accommodating cavity and the volume V2 of the second accommodating cavity satisfy $0.5\% \leq (V2\text{-}V1)/V1 \leq 5\%$, so that the safety performance of the electrochemical device is improved.

FIG. 4

EP 4 503 220 A1

**Description**

**TECHNICAL FIELD**

This application relates to the field of electrochemistry, and particularly relates to an electrochemical device and an electronic device.

**BACKGROUND**

Currently, batteries are widely applied to electronic products such as unmanned aerial vehicles, mobile phones, tablet computers, notebook computers, etc. In some application scenarios, a single battery cell cannot achieve the desired output power. Therefore, a plurality of battery cells are generally connected in series, in parallel, or in parallel and series, so that the plurality of battery cells cooperate together to achieve the desired output power. However, although the output power can be improved by connecting the plurality of battery cells in series, in parallel, or in parallel and series, the energy density of a whole battery pack is low. Therefore, a design for same pouch series/parallel connected battery is proposed. The same pouch series/parallel connected battery includes a housing and a plurality of electrode assemblies arranged in the same housing. The electrode assemblies connected in series need to be separated by separators to avoid the decomposition of an electrolyte under a high voltage, and the electrode assemblies connected in parallel can avoid mutual interference by being separated by the separators.

**SUMMARY**

The inventors of this application have found through research that, for the same pouch series/parallel connected batteries, the batteries are likely to expand under high-temperature conditions, thereby reducing the safety performance of the batteries.

In view of this, this application provides an electrochemical device and an electronic device, which can improve the safety performance of the electrochemical device.

To solve the above technical problem, a first aspect of this application provides an electrochemical device. The electrochemical device comprises a housing, a first electrode assembly, a second electrode assembly and N separators. The separators are arranged along a first direction, so that the N separators and the housing together define N+1 accommodating cavities arranged along the first direction, wherein the N+1 accommodating cavities comprise a first accommodating cavity and a second accommodating cavity adjacent to each other, wherein $N \geq 2$. The first electrode assembly is accommodated in the first accommodating cavity, and the second electrode assembly is accommodated in the second accommodating cavity. The second electrode assembly is far from a reference surface relative to the first electrode assembly, wherein the reference surface is a plane that passes through the center of the electrochemical device along the first direction and is perpendicular to the first direction, and the volume V1 of the first accommodating cavity and the volume V2 of the second accommodating cavity satisfy $0.5\% \leq (V2-V1)/V1 \leq 5\%$. The inventors of this application have found through research that, in a same pouch series/parallel connected battery, the expansion of the first accommodating cavity located on an inner side will squeeze the second accommodating cavity located on an outer side, and at the moment, the second accommodating cavity may have a risk of excessive expansion due to an excessive internal pressure. Through the above-mentioned solution, on the one hand, when $(V2-V1)/V1 \geq 0.5\%$, the second accommodating cavity has a larger space, so that the expansion generated from the first accommodating cavity located on the inner side can be effectively buffered by the larger second accommodating cavity, thereby inhibiting the occurrence of excessive overall expansion and a packaging failure of the electrochemical device due to the excessive internal pressure of the second accommodating cavity; and on the other hand, when $(V2-V1)/V1 \leq 5\%$, the internal pressure of the first accommodating cavity on the inner side can be inhibited from being too large due to the volume of the first accommodating cavity on the inner side being too small, so that the occurrence of the local excessive expansion of the electrochemical device and a packaging failure of the first accommodating cavity on the inner side is inhibited, thereby improving the safety performance of the electrochemical device.

In some embodiments, $1.5\% \leq (V2-V1)/V1 \leq 4\%$. In the above-mentioned solution, the second accommodating cavity can have a relatively larger buffer space, thereby further effectively inhibiting the internal pressure of the second accommodating cavity from being too large, and improving the safety performance of the electrochemical device.

In some embodiments, the volume V1 of the first accommodating cavity, the volume V3 of the first electrode assembly, the volume V2 of the second accommodating cavity and the volume V4 of the second electrode assembly satisfy $[(V1-V3)/V3]/[(V2-V4)/V4] \leq 0.9$. In the above-mentioned solution, the sizes of spaces occupied by the electrode assemblies in the accommodating cavities and the relative sizes of remaining spaces are considered, so that the second accommodating cavity can have a larger remaining space to buffer the expansion of the first accommodating cavity, thereby further improving the safety performance of the electrochemical device.

In some embodiments, the electrochemical device satisfies $2.5\% \leq (V1-V3)/V3 \leq 5.5\%$. In the above-mentioned solution, the first accommodating cavity has an appropriate remaining space to inhibit self-expansion, thereby reducing squeeze to the second accommodating cavity, and improving the safety performance of the electrochemical device.

In some embodiments, the electrochemical device satisfies $3\% \leq (V2-V4)/V4 \leq 9\%$. In the above-mentioned solution, the second accommodating cavity has a larger remaining space to buffer the expansion of the first accommodating cavity, thereby inhibiting the excessive overall expansion of the electrochemical device, and improving the safety performance of the electrochemical device.

In some embodiments, the electrochemical device further comprises first tabs and second tabs, wherein the first tabs are electrically connected to the first electrode assembly, the second tabs are electrically connected to the second electrode assembly, and both the first tabs and the second tabs are led out from a first side of the housing. A first plane divides the first accommodating cavity into a first space close to the first side and a second space away from the first side; and in a plane perpendicular to the first direction, a projection of the first plane along the first direction forms a first straight line, and a projection of a side edge of the first electrode assembly close to the first side along the first direction forms a first line segment. The first straight line passes through the first line segment. A second plane divides the second accommodating cavity into a third space close to the first side and a fourth space away from the first side; and in the plane perpendicular to the first direction, a projection of the second plane along the first direction forms a second straight line, and a projection of a side edge of the second electrode assembly close to the first side along the first direction forms a second line segment. The first straight line passes through the first line segment. The volume T1 of the first space and the volume T3 of the third space satisfy $5\% \leq (T3-T1)/T1 \leq 25\%$. In the above-mentioned solution, considering that head spaces in the accommodating cavities are more prone to expansion, when $5\% \leq (T3-T1)/T1 \leq 25\%$, the head space of the larger second accommodating cavity can buffer the expansion of the head of the first accommodating cavity, inhibiting the generation of excessive expansion of the head of the electrochemical device, thereby further improving the safety performance of the electrochemical device.

In some embodiments, the electrochemical device satisfies $10\% \leq (T3-T1)/T1 \leq 15\%$. In the above-mentioned solution, the head space in the second accommodating cavity can better buffer the expansion of the head of the first accommodating cavity, thereby inhibiting the generation of excessive expansion of the head of the electrochemical device.

In some embodiments, the electrochemical device satisfies that the second plane is located on one side of the first plane away from the first side. In the above-mentioned solution, after the head space (located on a first side of the first electrode assembly) of the first accommodating cavity expands, a larger buffer space can be provided, thereby improving the safety performance of the electrochemical device.

In some embodiments, the N separators comprise a first separator, wherein the first separator is arranged between the first accommodating cavity and the second accommodating cavity, and the first separator is recessed toward the first accommodating cavity to form a groove.

In some embodiments, the separator comprises a substrate layer and packaging layers located on surfaces of the substrate layer. In the above-mentioned solution, the separator has better isolation and packaging properties.

In some embodiments, the packaging layer comprises a first polymer material.

In some embodiments, a material of the substrate layer comprises at least one of a metal material, a second polymer material or a carbon material.

In some embodiments, the first polymer material comprises at least one of polypropylene, anhydride-modified polypropylene, polyethylene, ethylene-propylene copolymers, polyvinyl chloride, polystyrene, polyether nitrile, polyurethane, polyamide, polyester, amorphous alpha-olefin copolymers or derivatives of the above-mentioned substances.

In some embodiments, the metal material comprises at least one of Ni, Ti, Cu, Ag, Au, Pt, Fe, Co, Cr, W, Mo, Al, Mg, K, Na, Ca, Sr, Ba, Si, Ge, Sb, Pb, In, Zn, stainless steel (SUS) and compositions or alloys thereof.

In some embodiments, the second polymer material comprises at least one of polyethylene glycol terephthalate, polybutylene terephthalate, polyethylene naphthalate, polyether ether ketone, polyimide, polyamide, polyethylene glycol, polyamide-imide, polycarbonate, cyclic polyolefin, polyphenylene sulfide, polyvinyl acetate, polytetrafluoroethylene, polymethyl naphthalene, polyvinylidene difluoride, poly(propylene carbonate), poly(vinylidene fluoride-hexafluoropropylene), poly(vinylidene fluoride-co-chlorotrifluoroethylene), organosilicon, vinylon, polypropylene, anhydride-modified polypropylene, polyethylene, ethylene-propylene copolymers, polyvinyl chloride, polystyrene, polyether nitrile, polyurethane, polyphenyl ether, polyester, polysulfone, amorphous alpha-olefin copolymers or derivatives of the above-mentioned substances.

In some embodiments, the carbon material comprises at least one of a carbon felt, a carbon film, carbon black, acetylene black, fullerene, a conductive graphite film or a graphene film.

A second aspect of this application further provides an electronic device, comprising the electrochemical device according to any one of the aforementioned embodiments.

According to the electrochemical device provided by this application, the second electrode assembly is far from the reference surface relative to the first electrode assembly. In other words, the first electrode assembly is closer to a middle position of the electrochemical device along the first direction than the second electrode assembly, and thus the first accommodating cavity is closer to the middle position of the electrochemical device along the first direction than the second accommodating cavity. In this application, the volume V1 of the first accommodating cavity and the volume V2 of the second accommodating cavity satisfy $0.5\% \leq (V2-V1)/V1 \leq 5\%$. In other words, the second accommodating cavity is 0.5% to 5% larger than the first accommodating cavity. That is, the accommodating cavity of the electrochemical device closer to the outer side is 0.5% to 5% larger than the adjacent accommodating cavity closer to the inner side. On the one hand, when $(V2-V1)/V1 \geq 0.5\%$, the second accommodating cavity has a larger space, so that the expansion generated from the first accommodating cavity can be effectively buffered by the second accommodating cavity, thereby inhibiting the occurrence of excessive overall expansion and a packaging failure of the electrochemical device due to the excessive internal pressure of the second accommodating cavity; and on the other hand, when $(V2-V1)/V1 \leq 5\%$, the internal pressure of the first accommodating cavity on the inner side can be inhibited from being too large due to the volume of the first accommodating cavity on the inner side being too small, so that the occurrence of the local excessive expansion of the electrochemical device and a packaging failure of the first accommodating cavity on the inner side is inhibited, thereby improving the safety performance of the electrochemical device.

**BRIEF DESCRIPTION OF THE DRAWINGS**

To more clearly illustrate the technical solutions of the embodiments of this application, the accompanying drawings required by the embodiments of this application are introduced briefly below. Apparently, the accompanying drawings depicted below are merely some embodiments of this application, and those of ordinary skill in the art can also obtain other drawings based on the accompanying drawings.

FIG. 1 is a three-dimensional schematic view of an electrochemical device according to an embodiment of this application;

FIG. 2 is a three-dimensional schematic view of an electrochemical device after being sectioned according to an embodiment of this application;

FIG. 3 is a side view of an electrochemical device after being sectioned according to an embodiment of this application, where a second plane coincides with a first plane in the view;

FIG. 4 is a partially enlarged view of FIG. 3;

FIG. 5 is an exploded schematic view of an electrochemical device after being sectioned according to an embodiment of this application;

FIG. 6 is a side view of an electrochemical device after being sectioned according to another embodiment of this application; and

FIG. 7 is a partial schematic view of a side view of a separator according to an embodiment of this application.

**DETAILED DESCRIPTION OF EMBODIMENTS**

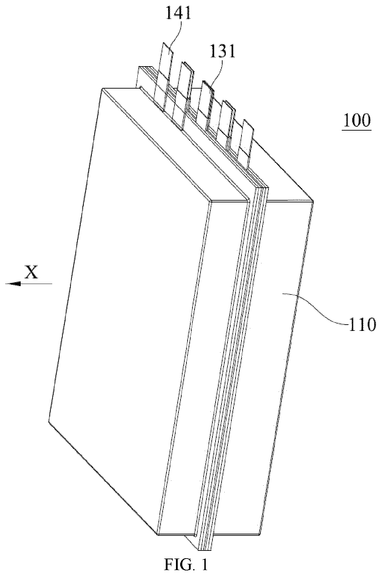

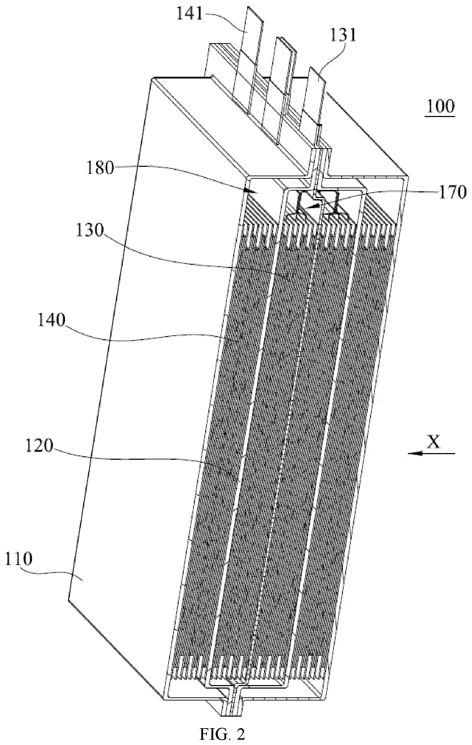

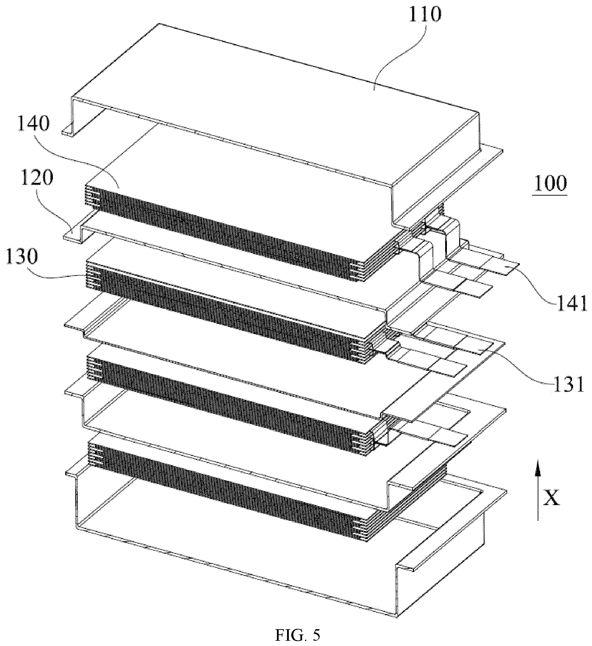

In order to facilitate understanding of this application, this application will be described below in more detail in conjunction with the accompanying drawings and specific embodiments. It should be noted that when an element is described as "being fixed to" another element, it may be directly on another element, or there may be one or more intermediate elements therebetween. When an element is described as "being connected to" another element, it may be directly connected to another element, or there may be one or more intermediate elements therebetween. The terms "vertical", "horizontal", "left", "right", and similar expressions used in this specification are for illustrative purposes only.
Unless otherwise defined, all technical and scientific terms used in this specification have the same meaning as commonly understood by those skilled in the art to which this application pertains. The terms used in the specification of this application are for the purpose of describing the specific embodiments only and are not intended to limit this application. The term "and/or" as used in this specification includes any combination and all combinations of one or more related listed items.
The inventors of this application have found through research that, in a same pouch series/parallel connected battery, the expansion of a first accommodating cavity located on an inner side will squeeze a second accommodating cavity located on an outer side, and at the moment, the second accommodating cavity may have a risk of excessive expansion due to an excessive internal pressure.
In view of this, referring to FIGs. 1-7, an embodiment of this application provides an electrochemical device, which can inhibit the occurrence of excessive expansion, thereby improving the safety performance of the electrochemical device. The following provides an example using the electrochemical device 100. The electrochemical device 100 includes a housing; 110, a first electrode assembly 130, a second electrode assembly 140 and N separators 120, wherein $N \geq 2$, i.e., N may be 2, 3, 4, 5, etc.

The separators 120 are arranged along a first direction X as shown in FIGs. 1-4. In some embodiments, the first direction X is a thickness direction of the electrochemical device 100. The N separators 120 and the housing 110 together define N+1 accommodating cavities arranged along the first direction X. For example, when the number N of the separators 120 is 2, the number of the accommodating cavities is 3, and when the number of the separators 120 is 3, the number of the accommodating cavities is 4.

The N+1 accommodating cavities include a first accommodating cavity 170 and a second accommodating cavity 180 adjacent to each other. A first electrode assembly 130 is accommodated in the first accommodating cavity 170, and the second electrode assembly 140 is accommodated in the second accommodating cavity 180. An electrolyte is provided in both the first accommodating cavity 170 and the second accommodating cavity 180, so that independent electrochemical units are formed within both the first accommodating cavity 170 and the second accommodating cavity 180. The electrochemical device 100 may further include other electrode assemblies, such that one electrode assembly is disposed in each of the accommodating cavities except for the first accommodating cavity 170 and the second accommodating cavity 180. In this embodiment, the electrochemical device 100 further includes first tabs 131 and second tabs 141, the two first tabs 131 with opposite polarities are connected to two current collectors with opposite polarities in the first electrode assembly 130 in one-to-one correspondence, and the first tabs extend out of the housing 110 from between the housing 110 and the separator 120; and the two second tabs 141 with opposite polarities are connected to two current collectors with opposite polarities in the second electrode assembly 140 in one-to-one correspondence, and the second tabs extend out of the housing 110 from between the housing 110 and the separator 120.

In some embodiments, the second electrode assembly 140 is far from a reference surface 160 relative to the first electrode assembly 130, wherein the reference surface 160 is a plane that passes through the center of the electrochemical device along the first direction X and is perpendicular to the first direction X. In other words, the first electrode assembly 130 is closer to the thickness center of the electrochemical device 100 along the first direction X than the second electrode assembly 140.

In some embodiments, the volume V1 of the first accommodating cavity 170 and the volume V2 of the second accommodating cavity 180 satisfy V2 > V1. At the time, because the second accommodating cavity 180 that is far from the thickness center of the electrochemical device 100 along the first direction X has a larger space, so that the expansion generated from the first accommodating cavity 170 on the inner side can be effectively buffered by the larger second accommodating cavity 180, inhibiting the occurrence of the excessive overall expansion and a packaging failure of the electrochemical device 100 caused by the internal pressure of the second accommodating cavity 180 being too large. In some embodiments, the volume V1 of the first accommodating cavity 170 and the volume V2 of the second accommodating cavity 180 satisfy $0.5\% \leq (V2-V1)/V1 \leq 5\%$. As an example, (V2-V1)/V1 may be 0.5 %, 1 %, 2 %, 3 %, 4 % or 5 %, etc. In other words, the second accommodating cavity 180 is 0.5% to 5% larger than the first accommodating cavity 170. That is, the accommodating cavity of the electrochemical device 100 closer to the outer side is 0.5% to 5% larger than the adjacent accommodating cavity closer to the inner side. At the moment, when $(V2-V1)/V1 \leq 5\%$, the internal pressure of the first accommodating cavity 170 on the inner side can be inhibited from being too large due to the volume of the first accommodating cavity 170 on the inner side being too small, so that the occurrence of local excessive expansion of the electrochemical device 100 and a packaging failure of the first accommodating cavity 170 on the inner side is inhibited, thereby improving the safety performance of the electrochemical device 100. The volume V1 of the first accommodating cavity 170 and the volume V2 of the second accommodating cavity 180 can be measured by dismantling the electrochemical device and can also be measured in situ using a three-dimensional CT scanning technology.

The first accommodating cavity 170 and the second accommodating cavity 180 may be any two adjacent accommodating cavities within the housing 110, where distances between the two accommodating cavities and the reference surface 160 are unequal. For example, when N is 4, the housing 110 is internally provided with 5 accommodating cavities. For the convenience of description, the thicknesses of the accommodating cavities along the first direction X are the same, and along the first direction X, the accommodating cavities are sequentially numbered as an accommodating cavity I, an accommodating cavity II, an accommodating cavity III, an accommodating cavity IV and an accommodating cavity V. When the thicknesses of the accommodating cavities along the first direction X are the same, the accommodating cavity III is closest to the thickness center of the electrochemical device 100 along the first direction X. The second accommodating cavity 180 may be the accommodating cavity I, and at the moment, the first accommodating cavity 170 is the accommodating cavity II; the second accommodating cavity 180 may also be the accommodating cavity II, and then the first accommodating cavity 170 is the accommodating cavity III; the second accommodating cavity 180 may also be the accommodating cavity IV, and then the first accommodating cavity 170 is the accommodating cavity III; and the second accommodating cavity 180 may also be the accommodating cavity V, and then the first accommodating cavity 170 is the accommodating cavity IV. When the number of the accommodating cavities of the electrochemical device 100 is another number, the configuration follows the rule.

Specifically, in the electrochemical device 100, only the first accommodating cavity 170 and the second accommodating cavity 180 may satisfy a spatial size relationship of $0.5\% \leq (V2-V1)/V1 \leq 5\%$. Also, all the adjacent accommodating cavities may satisfy the above relationship. As an example, in the foregoing embodiment when N is 4, it is possible to simultaneously satisfy the space of the accommodating cavity I being 0.5 % to 5% larger than that of the accommodating cavity II, the space of the accommodating cavity II being 0.5 % to 5 % larger than that of the accommodating cavity III, the space of the accommodating cavity IV is 0.5 % to 5% larger than that of the accommodating cavity III, and the space of the accommodating cavity V is 0.5 % to 5% larger than that of the accommodating cavity IV. When the number of the accommodating cavities of the electrochemical device 100 is another number, the configuration follows the rule.

In some embodiments, $1.5\% \leq (V2-V1)/V1 \leq 5\%$. As an example, $(V2-V1)/V1$ may be 1.5%, 2%, 2.5%, 3 % or 5%, etc. In the above-mentioned solution, the second accommodating cavity 180 can have a relatively larger buffer space, thereby further effectively inhibiting excessive internal pressure of the second accommodating cavity 180, and improving the safety performance of the electrochemical device 100.

The inventors of this application have further studied and found that a better effect can be achieved by controlling relative relations between the remaining spaces within the first accommodating cavity 170 and the second accommodating cavity 180 and spaces occupied by the electrode assemblies. Thus, in some embodiments, the volume V1 of the first accommodating cavity 170, the volume V3 of the first electrode assembly 130, the volume V2 of the second accommodating cavity 180 and the volume V4 of the second electrode assembly 140 are configured to satisfy $[(V1-V3)/V3]/[(V2-V4)/V4] \leq 0.9$. As an example, $[(V1-V3)/V3]/[(V2-V4)/V4]$ may be 0.5, 0.6, 0.7, 0.8 or 0.9, etc. $(V1-V3)/V3$ is a ratio of the remaining space within the first accommodating cavity 170 except for the space occupied by the first electrode assembly 130 to the space occupied by the first electrode assembly 130. $(V2-V4)/V4$ is a ratio of the remaining space within the second accommodating cavity 180 except for the space occupied by the second electrode assembly 140 to the space occupied by the second electrode assembly 140. In this embodiment, the sizes of the spaces occupied by the electrode assemblies in the accommodating cavities and the relative sizes of the remaining spaces are considered comprehensively, so that the second accommodating cavity 180 can have a larger remaining space to buffer the expansion of the first accommodating cavity 170, thereby further inhibiting excessive expansion of the electrochemical device 100, and improving the safety performance of the electrochemical device 100.

In some embodiments, the electrochemical device satisfies $2.5\% \leq (V1-V3)/V3 \leq 5.5\%$. In the above-mentioned solution, the first accommodating cavity 170 has an appropriate remaining space to inhibit self-expansion, thereby reducing squeeze to the second accommodating cavity 180, and improving the safety performance of the electrochemical device 100.

In some embodiments, the electrochemical device satisfies $3\% \leq (V2-V4)/V4 \leq 9\%$. In the above-mentioned solution, the second accommodating cavity 180 has a larger remaining space to buffer the expansion of the first accommodating cavity 170, thereby inhibiting the excessive overall expansion of the electrochemical device 100 and improving the safety performance of the electrochemical device 100.

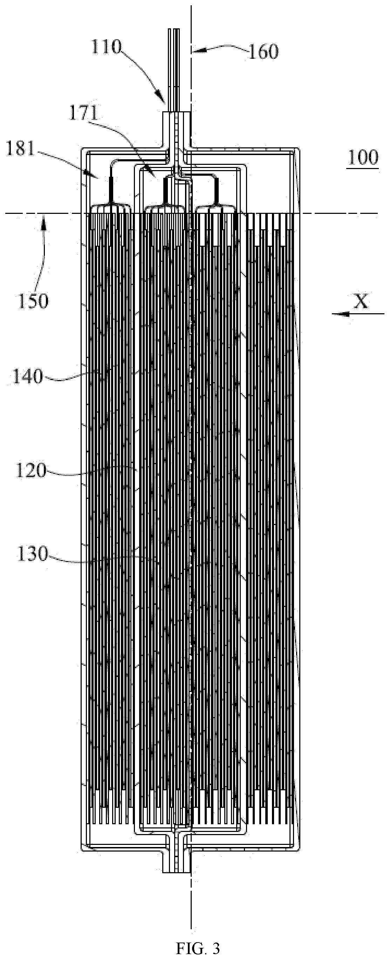

As shown in FIGs. 3-4, in some embodiments, the electrochemical device further includes first tabs 131 and second tabs 141, wherein the first tabs 131 are electrically connected to the first electrode assembly 130, the second tabs 141 are electrically connected to the second electrode assembly 140, and both the first tabs 131 and the second tabs 141 are led out from a first side of the housing 110. The first electrode assembly 130 and the second electrode assembly 140 are connected in series or in parallel through the first tabs 131 and the second tabs 141.

A first plane 150 divides the first accommodating cavity 170 into a first space 171 close to the first side and a second space away from the first side, and in a plane perpendicular to the first direction X, a projection of the first plane 150 along the first direction X forms a first straight line, and a projection of a side edge of the first electrode assembly 130 close to the first side along the first direction X forms a first line segment. The first straight line passes through the first line segment. In other words, the first plane 150 is attached to an end portion of the first electrode assembly 130 close to the first side. Specifically, when an end portion of an anode electrode plate of the first electrode assembly 130 close to the first side covers an end portion of a cathode electrode plate close to the first side, the first plane 150 is attached to the end portion of the anode electrode plate close to the first side. The first space 171 is a space of the first accommodating cavity 170 located on the first side of the electrode assembly.

A second plane divides the second accommodating cavity 180 into a third space 181 close to the first side and a fourth space away from the first side. In the plane perpendicular to the first direction X, a projection of the second plane along the first direction X forms a second straight line, and a projection of a side edge of the second electrode assembly 140 close to the first side along the first direction X forms a second line segment. The first straight line passes through the first line segment. In other words, the second plane is attached to an end portion of the second electrode assembly 140 close to the first side. Specifically, when an end portion of an anode electrode plate of the second electrode assembly 140 close to the first side covers an end portion of a cathode electrode plate close to the first side, the second plane is attached to the end portion of the anode electrode plate close to the second side. The third space 181 is a space of the second accommodating cavity 180 located on the first side of the electrode assembly.

The inventors of this application considered that volume expansion in each accommodating cavity of the electrochemical device 100 more easily occurs in the head space (namely, the space of the electrode assembly close to the tabs, i.e., the aforementioned first space 171 or the aforementioned third space 181). In view of this, in some embodiments, the volume T1 of the first space 171 and the volume T3 of the third space 181 are configured to satisfy $5\% \leq (T3-T1)/T1 \leq 25\%$. As an example, $(T3-T1)/T1$ may be 5%, 10%, 15%, 20% or 25%, etc. In this solution, considering that the head spaces in the accommodating cavities are more prone to expansion, when $5\% \leq (T3-T1)/T1 \leq 25\%$, the head space of the larger second accommodating cavity 180 can buffer the expansion of the head of the first accommodating cavity 170, inhibiting the excessive expansion of the head of the electrochemical device 100, thereby further improving the safety performance of the electrochemical device 100. Preferably, $10\% \leq (T3-T1)/T1 \leq 25\%$.

In some embodiments, the second plane is configured to be located on one side of the first plane 150 away from the first side. After the head space (located on the first side of the first electrode assembly 130) of the first accommodating cavity 170 expands, a larger buffer space can be provided, thereby improving the overall safety performance of the electrochemical device 100.

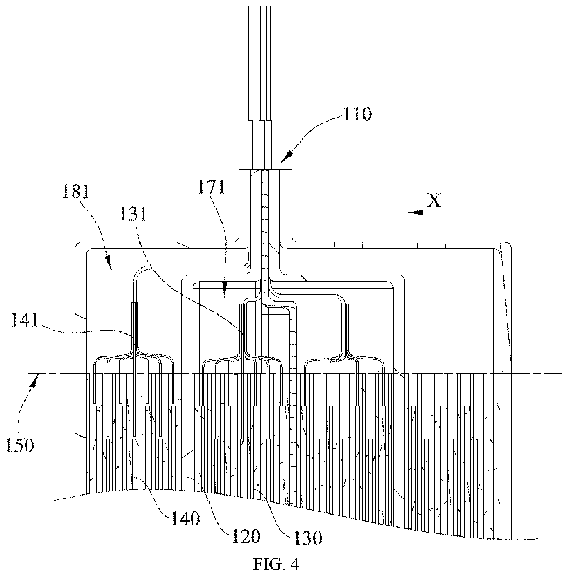

There are various methods for realizing that the space volume of the first accommodating cavity 170 is less than that of the second accommodating cavity 180. In one embodiment, it can be because the size of the first accommodating cavity 170 along the first direction X is less than that of the second accommodating cavity 180 along the first direction X, thereby enabling the space volume of the first accommodating cavity 170 to be less than that of the second accommodating cavity 180. In another embodiment, as shown in FIG. 4, it can be because the area of a cross section of the first accommodating cavity 170 parallel to the first direction X is less than that of a cross section of the second accommodating cavity 180 parallel to the first direction X, thereby enabling the space volume of the first accommodating cavity 170 to be less than that of the second accommodating cavity 180, and specifically, the area of the separator 120 recessed toward the second accommodating cavity 180 may be smaller.

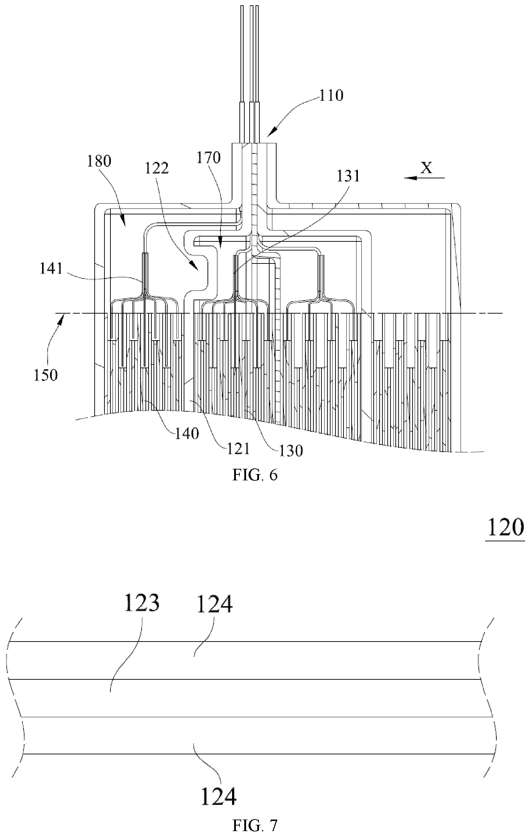

In yet another embodiment, as shown in FIG. 6, the N separators 120 include a first separator 121, where the first separator 121 is disposed between the first accommodating cavity 170 and the second accommodating cavity 180, and the first separator 121 is recessed toward the first accommodating cavity 170 to form a groove 122. The groove 122 may be formed by stamping using a stamping process. After stamping, the space in the first accommodating cavity 170 becomes smaller, and the space in the second accommodating cavity 180 becomes larger, such that the space volume of the second accommodating cavity 180 is greater than that of the first accommodating cavity 170. The machining process is low in cost and simple in machining. Likewise, in order to adjust volume ratios between all adjacent accommodating cavities, one groove 122 can be stamped on each of the separators 120.

The groove 122 may be disposed in any position of the first separator 121. In one embodiment, as shown in FIG. 6, the groove 122 is disposed in a position where the first separator 121 defines the first space 171 and the third space 181. In other words, in the plane perpendicular to the first direction X, a projection of the groove 122 along the first direction X is located within a projection of the first space 171 or the third space 181 along the first direction X. When the groove 122 is disposed in the described position, on the one hand, the accommodation of the electrolyte can be facilitated, and on the other hand, the groove will not be deformed due to the squeeze of the first electrode assembly 130 or the second electrode assembly 140.

As shown in FIG. 7, in some embodiments, the separator 120 includes a substrate layer 123 and packaging layers 124 located on surfaces of the substrate layer 123, and the packaging layers 124 are disposed on both sides of the substrate layer 123. The packaging layer 124 includes a first polymer material. A material of the substrate layer 123 includes at least one of a metal material, a second polymer material or a carbon material. The separator 120 may have electronic insulation or electronic conductivity. In some embodiments, the thickness of the separator 120 is 50 $\mu$m to 500 $\mu$m.

In some embodiments, the first polymer material includes at least one of polypropylene, anhydride-modified polypropylene, polyethylene, ethylene-propylene copolymers, polyvinyl chloride, polystyrene, polyether nitrile, polyurethane, polyamide, polyester, amorphous alpha-olefin copolymers or derivatives of the above-mentioned substances.

The metal material includes at least one of Ni, Ti, Cu, Ag, Au, Pt, Fe, Co, Cr, W, Mo, Al, Mg, K, Na, Ca, Sr, Ba, Si, Ge, Sb, Pb, In, Zn, stainless steel (SUS) and compositions or alloys thereof.

The second polymer material includes at least one of polyethylene glycol terephthalate, polybutylene terephthalate, polyethylene naphthalate, polyether ether ketone, polyimide, polyamide, polyethylene glycol, polyamide-imide, polycarbonate, cyclic polyolefin, polyphenylene sulfide, polyvinyl acetate, polytetrafluoroethylene, polymethyl naphthalene, polyvinylidene difluoride, poly(propylene carbonate), poly(vinylidene fluoride-hexafluoropropylene), poly(vinylidene fluoride-co-chlorotrifluoroethylene), organosilicon, vinylon, polypropylene, anhydride-modified polypropylene, polyethylene, ethylene-propylene copolymers, polyvinyl chloride, polystyrene, polyether nitrile, polyurethane, polyphenyl ether, polyester, polysulfone, amorphous alpha-olefin copolymers or derivatives of the above-mentioned substances.

The carbon material includes at least one of a carbon felt, a carbon film, carbon black, acetylene black, fullerene, a conductive graphite film or a graphene film.

The electrode assembly of this application is not particularly limited, and may be any electrode assembly of the prior art as long as the object of this application can be achieved, for example, a stacked electrode assembly or a wound electrode assembly may be used. The electrode assembly generally includes a positive electrode plate, a negative electrode plate and a separator film.

The negative electrode plate in this application is not particularly limited as long as the object of this application can be achieved. For example, the negative electrode plate generally includes a negative electrode current collector and a negative electrode active material layer. The negative electrode current collector is not particularly limited, and may be any negative electrode current collector known in the field, such as a copper foil, an aluminum foil, an aluminum alloy foil and a composite current collector, etc. The negative electrode active material layer includes a negative electrode active material. The negative electrode active material is not particularly limited, and may be any negative electrode active material known in the field. For example, the negative electrode active material may include at least one of artificial graphite, natural graphite, mesocarbon microbeads, soft carbon, hard carbon, silicon, silicon-carbon, lithium titanate, etc.

The positive electrode plate in this application is not particularly limited as long as the object of this application can be achieved. For example, the positive electrode plate generally includes a positive electrode current collector and a positive electrode active material layer. The positive electrode current collector is not particularly limited, and may be any positive electrode current collector known in the field, such as aluminum foil, aluminum alloy foil or a composite current collector, etc. The positive electrode active material layer includes a positive electrode active material. The positive electrode active material is not particularly limited and may be any positive electrode active material of the prior art, for example, may include at least one of lithium nickel cobalt manganese oxide (NCM), lithium nickel cobalt aluminum oxide (NCA), lithium iron phosphate, lithium cobalt oxide, lithium manganese oxide or lithium manganese iron phosphate.

The electrolyte in this application is not particularly limited and may be any electrolyte known in the field, for example, may be any one of a gel electrolyte, a solid electrolyte or a liquid electrolyte. For example, the liquid electrolyte may include a lithium salt and a non-aqueous solvent.

The lithium salt is not particularly limited, and may be any lithium salt known in the field as long as the object of this application can be achieved. For example, the lithium salt may include at least one of lithium hexafluorophosphate ($LiPF_6$), lithium tetrafluoroborate ($LiBF_4$), lithium difluorophosphate ($LiPO_2F_2$), lithium bis(trifluoromethanesulphonyl)imide $LiN(CF_3SO_2)_2$ (LiTFSI), lithium bis(fluorosulfonyl)imide $Li(N(SO_2F)_2)$ (LiFSI), lithium bis(oxalate)borate $LiB(C_2O_4)_2$ (LiBOB) or lithium difluoro(oxalato)borate $LiBF_2(C_2O_4)$ (LiDFOB). For example, the lithium salt may be $LiPF_6$.

The non-aqueous solvent is not particularly limited as long as the object of this application can be achieved. For example, the non-aqueous solvent may include at least one of a carbonate compound, a carboxylic ester compound, an ether compound, a nitrile compound or other organic solvents.

For example, the carbonate compound may include at least one of diethyl carbonate (DEC), dimethyl carbonate (DMC), ethyl methyl carbonate (EMC), dipropyl carbonate (DPC), methyl propyl carbonate (MPC), ethyl propyl carbonate (EPC), ethylene carbonate (EC), propylene carbonate (PC), butylene carbonate (BC), vinylethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate or trifluoromethyl ethylene carbonate.

The separator film in this application is not particularly limited, for example, the separator film includes a polymer or an inorganic substance, etc. formed from a material that is stable to the electrolyte in this application. The separator film generally should have ionic conductivity and electronic insulation.

For example, the separator film may include a substrate layer and a surface treatment layer. The substrate layer may be a non-woven fabric, a film or a composite film with a porous structure. A material of the substrate layer may be selected from at least one of polyethylene, polypropylene, polyethylene terephthalate and polyimide. Optionally, a polypropylene porous film, a polyethylene porous film, a polypropylene non-woven fabric, a polyethylene non-woven fabric or a polypropylene-polyethylene-polypropylene porous composite film may be used. Optionally, the surface treatment layer is disposed on at least one surface of the substrate layer. The surface treatment layer may be a polymer layer or an inorganic substance layer, and may also be a layer formed by mixing a polymer or an inorganic substance.

For example, the inorganic substance layer includes inorganic particles and a binder. The inorganic particles are not particularly limited, and for example, may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide and barium sulfate. The binder is not particularly limited, and for example, may include a combination of one or more of polyvinylidene difluoride, a vinylidene fluoride-hexafluoropropylene copolymer, polyamide, polyacrylonitrile, polyacrylate, polyacrylic acid, sodium polyacrylate, polyvinyl pyrrolidone, polyvinyl ether, poly(methyl methacrylate), polytetrafluoroethylene and polyhexafluoropropylene. The polymer layer includes a polymer. A material of the polymer includes at least one of polyamide, polyacrylonitrile, an acrylate polymer, polyacrylic acid, sodium polyacrylate, polyvinyl pyrrolidone, polyvinyl ether, polyvinylidene difluoride or poly(vinylidene fluoride-hexafluoropropylene).

A second aspect of this application further provides an electronic device, including the electrochemical device according to any one of the aforementioned embodiments.

The embodiments of this application will be described below more specifically by providing embodiments and comparative examples. Various tests and evaluations are conducted according to the following methods, and "parts" and "percent" are based on weight unless otherwise specified.

A preparation process of a lithium-ion battery in the embodiments and the comparative examples is as follows:

**Embodiment 1**

(1) Preparation of a positive electrode plate

mixing the positive electrode active material $Li(Ni_{0.5}Co_{0.2}Mn_{0.3})O_2$, a conductive agent Super P, and a binder polyvinylidene difluoride according to a weight ratio of 96:2.2:1.8, adding N-methyl-2-pyrrolidone (NMP), and stirring uniformly under the action of a vacuum stirrer to obtain a positive electrode slurry, wherein the solid content of the positive electrode slurry is 72 wt%; evenly coating the positive electrode slurry onto an aluminum foil of a positive electrode current collector; drying the coated aluminum foil at 85°C, then conducting cold pressing, cutting and slitting, and subsequently conducting drying at 85°C under a vacuum condition for 4 h to obtain the positive electrode plate.

(2) Preparation of a negative electrode plate

mixing the negative electrode active material, the artificial graphite, the conductive agent Super P, a thickener sodium carboxymethyl cellulose (CMC), and a binder styrene butadiene rubber (SBR) according to a weight ratio of 96:2:0.8:1.2, adding deionized water, and obtaining a negative electrode slurry under the action of the vacuum stirrer, wherein the solid content of the negative electrode slurry is 54 wt%; evenly coating the negative electrode slurry onto a copper foil of a negative electrode current collector; drying the coated copper foil at 85°C, then conducting cold pressing, cutting, and slitting; and subsequently, conducting drying under a vacuum condition of 120°C for 12 h to obtain the negative electrode plate.

(3) Preparation of an electrolyte

in a dry argon-atmosphere glovebox, mixing an organic solvent EC (ethylene carbonate), DEC (diethyl carbonate) and EMC (ethyl methyl carbonate) at a mass ratio of EC/DEC/EMC being 3/2/5, and then adding $LiPF_6$ (lithium hexafluorophosphate) into the organic solvent and mixing uniformly to obtain the electrolyte with the concentration of $LiPF_6$ being 1.15 M.

(4) Preparation of a separator film

selecting a polyethylene (PE) separator film with a thickness of 9 $\mu$m, coating a slurry containing PVDF and inorganic particles ($Al_2O_3$) and then drying to obtain the final separator film, wherein the thickness of a coating is 3 $\mu$m, and the porosity of the separator film is 55%.

(5) Preparation of an electrode assembly

stacking the positive electrode plate, the separator film and the negative electrode plate in sequence, so that the separator film is located between the positive electrode plate and the negative electrode plate to achieve the effect of isolation, then conducting winding to obtain the electrode assembly, and welding tabs for later use;

(6) Preparation of a separator

uniformly dispersing a packaging substance PP in packaging layers into a dispersing agent NMP (N-methyl-2-pyrrolidone) to obtain a packaging layer suspension with the concentration being 45 wt%; preparing the packaging layers PP having a thickness of 40 $\mu$m on both surfaces of a substrate layer Al layer having a thickness of 20 $\mu$m by a coating machine; and drying the dispersing agent NMP in the packaging layer suspension at 130°C to complete the preparation of the separator.

(7) Preparation of a lithium-ion battery

placing an aluminum plastic film formed by pit punching and having a thickness of 90 $\mu$m in an assembly fixture with a pit facing upward, then placing an electrode assembly A in the pit, then according to the design of the difference in the volumes of accommodating cavities on two sides, placing the separator with an appropriate pit punching area and depth on the electrode assembly A, and applying external force to press firmly; placing the described assembled semi-finished product in another assembly fixture, placing another electrode assembly B on the separator, then placing another separator formed by pit punching on the electrode assembly B, and applying external force to press firmly; next, placing another electrode assembly C on the separator, then covering another aluminum plastic film formed by pit punching and having a thickness of 90 $\mu$m on the electrode assembly C with a pit surface downward, conducting heat sealing on the two aluminum plastic films together with the separators by hot pressing, so that the electrode assembly A, the electrode assembly B and the electrode assembly C are separated by the separators, and then obtaining an assembled electrode assembly; and

injecting the prepared electrolyte into the accommodating cavities of the described assembled electrode assembly, conducting vacuum packaging, standing, formation, shaping, capacity testing, etc., and connecting the electrode assemblies in series to obtain the final lithium-ion battery.

**Embodiments 2-15 and Comparative Examples 1-2**

Corresponding specific structure size parameters of lithium-ion batteries are adjusted according to Table 1, and other parameters are the same as those in Embodiment 1.

High-temperature storage stability test method

In an environment of 25$\pm$3°C, the lithium-ion battery is charged at a constant current rate of 0.05 C to a fully-charged design voltage of 4.3$\times$n V (where n is the number of electrode assemblies), then charged at a fully-charged design voltage of 4.3$\times$n V until a cut-off current is 0.025 C, so that the lithium-ion battery reaches a fully-charged state; the thickness of the lithium-ion battery at this time is measured as H0, and the lithium-ion battery is placed in a constant-temperature chamber at 60°C for 24 h; and after being taken out, the lithium-ion battery is cooled to 25$\pm$3°C, a maximum thickness of the lithium-ion battery at this moment is measured as H1, and the high-temperature storage expansion rate = (H1-H0)/H0$\times$100%. At the same time, whether leakage exists in a packaging part of the lithium-ion battery is observed.

Table 1 shows the structural size parameters and performance of lithium-ion batteries in the embodiments and the comparative examples.

Table 1

| | Electrode assembly Number | (V2-V1)/-V1 | (V1-V3)/V3 | (V2-V4)/-V4 | [(V1-V3)/-V3]/[(V2-V4)/V4] | (T3-T1)/T1 | High-temperature storage expansion rate | Leak yes/no |
|---|---|---|---|---|---|---|---|---|
| **Embodiment 1** | 3 | 2.5% | 4.2% | 5.3% | 0.79 | 10.3% | 4.6% | No |
| **Embodiment 2** | 3 | 5% | 5.2% | 8.6% | 0.60 | 15% | 9.8% | No |
| **Embodiment 3** | 3 | 4.5% | 4.8% | 6.5% | 0.74 | 15% | 7.8% | No |
| **Embodiment 4** | 3 | 4.0% | 6.8% | 7.7% | 0.88 | 15% | 6.7% | No |
| **Embodiment 5** | 3 | 3.5% | 5.0% | 8.2% | 0.61 | 15% | 5.4% | No |
| **Embodiment 6** | 3 | 3% | 4.3% | 6.1% | 0.70 | 15% | 3.1% | No |
| **Embodiment 7** | 3 | 2.0% | 4.1% | 7.4% | 0.55 | 15% | 2.5% | No |
| **Embodiment 8** | 3 | 1.5% | 5.0% | 8.0% | 0.63 | 15% | 3.2% | No |
| **Embodiment 9** | 3 | 1.0% | 2.8% | 3.3% | 0.85 | 15% | 7.4% | No |
| **Embodiment 10** | 3 | 0.5% | 2.5% | 4.6% | 0.54 | 15% | 9.9% | No |

(continued)

| | Electrode assembly Number | (V2-V1)/-V1 | (V1-V3)/V3 | (V2-V4)/-V4 | [(V1-V3)/-V3]/[(V2-V4)/V4] | (T3-T1)/T1 | High-temperature storage expansion rate | Leak yes/no |
|---|---|---|---|---|---|---|---|---|
| Embodiment 11 | 3 | 4.0% | 6.2% | 6.7% | 0.93 | 15% | 8.1% | No |
| Embodiment 12 | 4 | 1.3% | 4.5% | 5.5% | 0.82 | 7.8% | 7.3% | No |
| Embodiment 13 | 4 | 1.8% | 3.7% | 5.3% | 0.70 | 8.4% | 6.2% | No |
| Embodiment 14 | 5 | 1.7% | 4.2% | 6.2% | 0.68 | 8.0% | 6.9% | No |
| Embodiment 15 | 5 | 0.7% | 5.5% | 7.8% | 0.71 | 5.3% | 8.7% | No |
| Comparative Example 1 | 3 | 0.3% | 4.3% | 5.1% | 0.84 | 15% | 15.3% | Yes |
| Comparative Example 2 | 3 | 6.2% | 4.3% | 5.1% | 0.84 | 15% | 13.5% | Yes |

It can be seen from the comparison between Embodiments 1-15 and Comparative Examples 1-2 in Table 1, that the lithium-ion batteries in Embodiments 1-15 satisfy 0.5 % $\leq$ (V2-V1)/V1 $\leq$ 5% have significantly reduced high-temperature storage expansion rates and better packaging stability. This is because, on the one hand, when (V2-V1)/V1 $\geq$ 0.5 %, the accommodating cavity located on the outer side has a larger space, so that the expansion generated from the accommodating cavity located on the inner side can be effectively buffered by the larger accommodating cavity on the outer side , thereby inhibiting the occurrence of excessive overall expansion and a packaging failure of the lithium-ion battery due to the excessive internal pressure of the accommodating cavity on the outer side, thereby improving the safety performance of the lithium-ion battery; and on the other hand, when (V2-V1)/V1 $\leq$ 5 %, the internal pressure of the accommodating cavity on the inner side can be inhibited from being too large due to the volume of the accommodating cavity on the inner side being too small, so that the occurrence of local excessive expansion and leakage of the accommodating cavity on the inner side is inhibited, thereby further improving the safety performance of the battery.

Further, it can be seen from the comparison between Embodiments 4 and 11 that Embodiment 4 that further satisfies [(V1-V3)/V3]/[(V2-V4)/V4] $\leq$ 0.9 can have a low high-temperature storage expansion rate. This is because the sizes of the spaces occupied by the electrode assemblies in the accommodating cavities and the relative sizes of the remaining spaces are considered comprehensively, so that the accommodating cavity on the outer side can have a larger remaining space to buffer the expansion of the accommodating cavity on the inner side, thereby further inhibiting high-temperature storage expansion of the lithium-ion battery.

In addition, it can be seen from the comparison between Embodiments 1-9 and Embodiments 12-15 that Embodiments that satisfy 10% $\leq$ (T3-T1)/T1 $\leq$ 15 % can have a low high-temperature storage expansion rate. This is because, considering that the head space in the accommodating cavity is more prone to expansion, when 10 % $\leq$ (T3-T1)/T1 $\leq$ 15 %, the head space of the larger accommodating cavity on the outer side can buffer the expansion of the head of the accommodating cavity on the inner side, inhibiting the excessive expansion of the head of the lithium-ion battery, thereby further reducing the high-temperature storage expansion rate of the lithium-ion battery.

It should be noted that preferred embodiments of this application are provided in the specification of this application and the accompanying drawings thereof. However, this application may be implemented in various forms and is not limited to the embodiments described in this specification. These embodiments are not intended to limit the content of this application additionally, and the purpose of providing these embodiments is to make a more comprehensive understanding of the disclosed content of this application. Furthermore, the described technical features are continuously combined to form various embodiments not listed above, and all these embodiments are considered to be within the scope depicted in the description of this application. Further, those of ordinary skill in the art may make improvements or modifications according to the above description, and all these improvements and modifications shall belong to the scope of protection of the appended claims of this application.

**Claims**

1. An electrochemical device, **characterized by** comprising:

   a housing;
   N separators, wherein the N separators are arranged along a first direction, so that the N separators and the housing together define N+1 accommodating cavities arranged along the first direction; and the N+1 accommodating cavities comprise a first accommodating cavity and a second accommodating cavity adjacent to each other, wherein N ≥ 2; and
   a first electrode assembly and a second electrode assembly, wherein the first electrode assembly is accommodated in the first accommodating cavity, and the second electrode assembly is accommodated in the second accommodating cavity;
   wherein the second electrode assembly is far from a reference surface relative to the first electrode assembly, the reference surface is a plane that passes through the center of the electrochemical device along the first direction and is perpendicular to the first direction, and the volume V1 of the first accommodating cavity and the volume V2 of the second accommodating cavity satisfy 0.5 % ≤ (V2-V1)/V1 ≤ 5 %.

2. The electrochemical device according to claim 1, **characterized in that**,

$$1.5\% \leq (V2\text{-}V1)/V1 \leq 4\%.$$

3. The electrochemical device according to claim 1, **characterized in that**, the volume V1 of the first accommodating cavity, the volume V3 of the first electrode assembly, the volume V2 of the second accommodating cavity and the volume V4 of the second electrode assembly satisfy [(V1-V3)/V3]/[(V2-V4)/V4] ≤ 0.9.

4. The electrochemical device according to claim 3, **characterized in that**, the electrochemical device satisfies at least one of the following conditions from (a) to (b):

$$(a)\ 2.5\% \leq (V1\text{-}V3)/V3 \leq 5.5\%;$$

$$(b)\ 3\% \leq (V2\text{-}V4)/V4 \leq 9\%.$$

5. The electrochemical device according to claim 1, **characterized in that**, the electrochemical device further comprises first tabs and second tabs, wherein the first tabs are electrically connected to the first electrode assembly, the second tabs are electrically connected to the second electrode assembly, and both the first tabs and the second tabs are led out from a first side of the housing;

   wherein a first plane divides the first accommodating cavity into a first space close to the first side and a second space away from the first side; in a plane perpendicular to the first direction, a projection of the first plane along the first direction forms a first straight line, and a projection of a side edge of the first electrode assembly close to the first side along the first direction forms a first line segment; the first straight line passes through the first line segment;
   wherein a second plane divides the second accommodating cavity into a third space close to the first side and a fourth space away from the first side; in the plane perpendicular to the first direction, a projection of the second plane along the first direction forms a second straight line, and a projection of a side edge of the second electrode assembly close to the first side along the first direction forms a second line segment; the first straight line passes through the first line segment; and
   wherein the volume T1 of the first space and the volume T3 of the third space satisfy 5 % ≤ (T3-T1)/T1 ≤ 25 %.

6. The electrochemical device according to claim 5, **characterized in that**, the electrochemical device satisfies at least one of the following conditions from (c) to (d):

$$(c)\ 10\% \leq (T3\text{-}T1)/T1 \leq 15\%;$$

(D) the second plane is located on a side of the first plane away from the first side.

7. The electrochemical device according to claim 1, **characterized in that**,
the N separators comprise a first separator, the first separator is arranged between the first accommodating cavity and the second accommodating cavity, and the first separator is recessed toward the first accommodating cavity to form a groove.

8. The electrochemical device according to claim 1, **characterized in that**,
each of the separators comprises a substrate layer and packaging layers located on surfaces of the substrate layer, the substrate layer comprises a metal, and each of the packaging layers comprises a first polymer material; and a material of the substrate layer comprises at least one of a metal material, a second polymer material or a carbon material.

9. The electrochemical device according to claim 8, **characterized in that**,

the first polymer material comprises at least one of polypropylene, anhydride-modified polypropylene, polyethylene, ethylene-propylene copolymers, polyvinyl chloride, polystyrene, polyether nitrile, polyurethane, polyamide, polyester, amorphous alpha-olefin copolymers or derivatives of the above-mentioned substances;
wherein the metal material comprises at least one of Ni, Ti, Cu, Ag, Au, Pt, Fe, Co, Cr, W, Mo, Al, Mg, K, Na, Ca, Sr, Ba, Si, Ge, Sb, Pb, In, Zn, stainless steel (SUS) and compositions or alloys thereof;
wherein the second polymer material comprises at least one of polyethylene glycol terephthalate, polybutylene terephthalate, polyethylene naphthalate, polyether ether ketone, polyimide, polyamide, polyethylene glycol, polyamide-imide, polycarbonate, cyclic polyolefin, polyphenylene sulfide, polyvinyl acetate, polytetrafluoroethylene, polymethyl naphthalene, polyvinylidene difluoride, poly(propylene carbonate), poly(vinylidene fluoride-hexafluoropropylene), poly(vinylidene fluoride-co-chlorotrifluoroethylene), organosilicon, vinylon, polypropylene, anhydride-modified polypropylene, polyethylene, ethylene-propylene copolymers, polyvinyl chloride, polystyrene, polyether nitrile, polyurethane, polyphenyl ether, polyester, polysulfone, amorphous alpha-olefin copolymers or derivatives of the above-mentioned substances; and
wherein the carbon material comprises at least one of a carbon felt, a carbon film, carbon black, acetylene black, fullerene, a conductive graphite film or a graphene film.

10. An electronic device, **characterized by** comprising the electrochemical device according to any one of claims 1-9.

141

131

100

X

110

FIG. 1

FIG. 2

FIG. 3

FIG. 4

FIG. 5

FIG. 6

120

FIG. 7

# EP 4 503 220 A1

<table>
<tr><td colspan="2" style="text-align:center"><b>INTERNATIONAL SEARCH REPORT</b></td><td>International application No.<br><br><b>PCT/CN2022/084557</b></td></tr>
</table>

## A. CLASSIFICATION OF SUBJECT MATTER

H01M 10/0525(2010.01)i;  H01M 50/112(2021.01)i

According to International Patent Classification (IPC) or to both national classification and IPC

## B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI: 电池, 电极, 隔离件, 体积, 膨胀, 缓冲, battery, electrode, separator, volume, expansion, buffer

## C. DOCUMENTS CONSIDERED TO BE RELEVANT

| Category* | Citation of document, with indication, where appropriate, of the relevant passages | Relevant to claim No. |
|---|---|---|
| A | CN 113921994 A (NINGDE AMPEREX TECHNOLOGY LTD.) 11 January 2022 (2022-01-11)<br>    description, paragraphs 3-112, and figures 1-9 | 1-10 |
| A | CN 106711363 A (BEIJING PRIDE NEW ENERGY BATTERY CO., LTD.) 24 May 2017 (2017-05-24)<br>    description, paragraphs 2-42, and figures 1-6 | 1-10 |
| A | CN 108630995 A (TOSHIBA CORP.) 09 October 2018 (2018-10-09)<br>    entire document | 1-10 |
| A | JP 2016081597 A (SONY CORP.) 16 May 2016 (2016-05-16)<br>    entire document | 1-10 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 December 2022** | **03 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/084557**

| Patent document cited in search report | | | Publication date (day/month/year) | Patent family member(s) | | | Publication date (day/month/year) |
|---|---|---|---|---|---|---|---|
| CN | 113921994 | A | 11 January 2022 | None | | | |
| CN | 106711363 | A | 24 May 2017 | None | | | |
| CN | 108630995 | A | 09 October 2018 | KR | 20180106809 | A | 01 October 2018 |
| | | | | BR | 102017019291 | A2 | 30 October 2018 |
| | | | | JP | 2018156902 | A | 04 October 2018 |
| | | | | EP | 3379596 | A1 | 26 September 2018 |
| | | | | US | 2018277904 | A1 | 27 September 2018 |
| | | | | JP | 6677671 | B2 | 08 April 2020 |
| | | | | US | 10840563 | B2 | 17 November 2020 |
| | | | | EP | 3379596 | B1 | 07 April 2021 |
| | | | | CN | 108630995 | B | 24 September 2021 |
| JP | 2016081597 | A | 16 May 2016 | JP | 6742067 | B2 | 19 August 2020 |

Form PCT/ISA/210 (patent family annex) (January 2015)